# EUROPÄISCHE PATENTSCHRIFT

(11) **EP 3 617 437 B1**
(45) Veröffentlichungstag und Bekanntmachung des Hinweises auf die Patenterteilung: **20.01.2021**
(21) Anmeldenummer: 19192202.0
(22) Anmeldetag: 19.08.2019
(51) Int. Cl.: E21B 7/30, E21B 10/26, F16L 1/028, F16L 55/165, F16L 55/18

(54) **KEGELFRÄSER ZUM ENTFERNEN EINES IM ERDREICH VERLEGTEN KUNSTSTOFFROHRES**
CONE CUTTER FOR REMOVING A PLASTIC PIPE LAID IN THE GROUND
FIBRE CONIQUE PERMETTANT D'ENLEVER UN TUBE EN MATIÈRE PLASTIQUE POSÉ DANS LA TERRE

(30) Priorität: 31.08.2018 DE 202018104992 U
(43) Veröffentlichungstag der Anmeldung: 04.03.2020
(73) Patentinhaber: Alteilges, Birgit, 33335 Gütersloh (DE)
(72) Erfinder: ALTEILGES, Christian, 33335 Gütersloh (DE); BÜSCHER, Karl-Josef, 33378 Rheda-Wiedenbrück (DE)
(74) Vertreter: Pellengahr, Maximilian Rudolf

(56) Entgegenhaltungen:
- EP-A1- 3 211 284
- DE-A1- 4 308 654
- JP-A- H0 230 891
- US-A- 5 127 481
- US-A- 5 205 671

## Beschreibung

### Einleitung

Die Erfindung betrifft einen Kegelfräser zum Entfernen eines im Erdreich verlegten Kunststoffrohres, wie beispielsweise ein Gas-, ein Wasser- oder ein Abwasserrohr, welches aus PVC, PE, PET, SLM-Material besteht, der mit einem rotierenden Bohrgestänge einer Bohrmaschine zusammenwirkt, welches zur Zerspanung des Rohrs eingefahren wird, und der Kegelfräser Spülungskanäle umfasst, durch die die durch das Rohrgestänge gepumpte Spülung mit der anfallenden Späne in dem von Rohr und Rohrgestänge gebildeten Ringraum abgeführt werden.

### Stand der Technik

Aus dem Stand der Technik ist gemäß der EP 3 211 284 A1 ein derartig beschriebener Kegelfräser bekannt, wobei der Kegelfräser am Kegelstoffmantel Hartmetalleinlagen oder auch Schneiden aufweist, die bei der schälenden Rotation das verlegte Kunststoffrohr zerspanen, um es auf diese Weise aus dem Erdreich zu entfernen.

Bei dem Zerstörungsprozess bzw. beim Zerspanen des Kunststoffes ergibt sich nun das Problem, dass die Späne eine Form von Fäden bzw. Locken einnehmen, so dass diese sich im Ringraum vor dem Kegelfräser verwickeln. Dadurch bildet sich ein Stau, wobei die Spanfäden in dem Ringraum einen Pfropfen bilden, der ein Abfördern der Späne nicht mehr gewährleistet. Hierbei kommt es dazu, dass sich der Kegelfräser festsetzt, was zu einem Rohrbruch des Gestänges führen kann.

### Aufgabe

Der Erfindung stellt sich somit das Problem, einen Kegelfräser zum Entfernen eines im Erdreich verlegten Kunststoffrohres derart weiter zu bilden, der insbesondere die geschilderten Nachteile überwindet, wobei gewährleistet werden soll, dass die anfallende Späne für den Spülungsprozess störungsfrei abgeführt wird.

### Lösung

Erfindungsgemäß wird dieses Problem mit den Merkmalen des Anspruchs 1 gelöst. Vorteilhafte Weiterbildungen der Erfindung ergeben sich aus den Unteransprüchen.

Die mit der Erfindung erreichten Vorteile bestehen darin, dass aufgrund eines im Ringraum angeordneten Zerkleinerungswerkzeuges sich sogenannte Spanfäden oder Spanlocken im Ringraum nicht mehr bilden können, weil diese durch das Werkzeug gekappt bzw. zerschnitten werden, so dass sie in Spanstücke verwandelt werden, die leicht und einfach durch die Spülung abgefördert werden können. Somit wird sichergestellt, dass ein sich Festfressen des Kegelfräsers beim Bohrprozess verhindert wird.

Erfindungsgemäß wird dies Problem dadurch gelöst, dass im Ringraum ein Zerkleinerungswerkzeug für die anfallenden abgeschälten Spanfäden vorgesehen ist. Das Zerkleinerungswerkzeug ist dem Kegelfräser im Ringraum vorgeschaltet, so dass die von dem Kegelfräser anfallenden Spanfäden oder Spanlocken hier direkt dem Zerkleinerungswerkzeug zugeführt werden. Das Zerkleinerungswerkzeug als solches umfasst hierbei ein mit Schneiden versehenes Rad, welches von seinen gebogenen Öffnungsschlitzen wie ein Messer wirken, die die einzelnen Fäden zerhacken oder abschneiden.

Nach einer besonders vorteilhaften Ausgestaltung der Erfindung ist das Schneidrad frei drehbar auf dem Bohrgestänge angeordnet, wobei die Rotation vornehmlich durch die rückgeführte Spülung erfolgt.

Eine andere Möglichkeit, das Schneidrad anzutreiben, besteht darin, dass das Schneidrad mit Presssitz auf dem Mantel des Bohrgestänges angeordnet ist. Dabei wird das Schneidrad durch die Drehung des Bohrgestänges angetrieben.

Nach einer besonders vorteilhaften Ausgestaltung der Erfindung ist vor dem Rad ein Stabilisator angeordnet. Der Stabilisator umfasst hierbei einen Führungsring, über dessen Umfang verteilt federgelagerte Wälzkörper angeordnet sind, die an der Rohrinnenwandung anliegen. Aufgrund dieser Ausbildung wird erreicht, dass eine exakte Zentrierung des Kegelfräsers einerseits, aber auch des Schneidrades andererseits, im Ringraum des abzutragenden Rohres gewährleistet ist.

Hierbei ist der Führungsring auf einem Stellring zur Fixierung des Stabilisators auf dem Mantel des Bohrgestänges angeordnet. Nach einer vorteilhaften Ausgestaltung sind das Rad und der Stabilisator auf einem Anschlussrohrstück für den Kegelfräser angeordnet. Somit bilden insbesondere das Schneidrad und der Stabilisator eine Einheit, die dann entsprechend an dem Kegelstumpf angeflanscht werden kann, an die dann das Bohrgestänge angeschlossen wird.

Nach einer besonders vorteilhaften Ausführung der Erfindung übt das Schneidrad selbst die Zentrierung des Kegelfräsers aus. Bei dieser Art der Ausführung ist das Schneidrad in seiner Funktion als Zentriereinrichtung für den Kegelfräser drehbar auf dem Bohrgestänge gelagert. Der Mantel des Schneidrades liegt hierbei im angesetzten Zustand an der Innenwandung des Rohres an, wobei in Folge eines Reibschlusses zwischen Mantel und der Innenwand das Schneidrad bei drehendem Bohrgestänge eine nicht rotierende Position im Rohr behält. Das Schneidrad bildet somit ein verschiebbar gelagertes Element, welches an der Rohrwandung gleitend und führend anliegt. Auf diese Weise bewirkt das im Rohr gleitende Schneidrad eine Ausrichtung des Kegelfräsers in Rohrachse.

Zudem wirkt das stehende Schneidrad in dem Rohr wie ein dem Kegelfräser vorgeschaltetes Messer an dem der sich bildende Span in Folge des Rückbaus gekappt wird. Dies ist dadurch bedingt, das in Folge der rotierenden Bewegung des Kegelfräsers die sich bildenden Spanfäden am nicht rotierenden Schneidrad abgerissen werden und somit über die Spülung ausgetragen werden können. Eine Staubildung vor dem Kegelfräser wird dadurch unterbunden.

Gemäß einer Weiterbildung ist hierbei das Schneidrad am Bohrgestänge mittels Wälzkörper gelagert. Denkbar sind hierbei auch andere Lagerungen vorzusehen, wobei auch ein abgedichtetes Gleitlager durchaus eingesetzt werden kann.

### Ausführungsbeispiele

Ein Ausführungsbeispiel der Erfindung ist in Figuren schematisch dargestellt und wird nachfolgend näher beschrieben.
- Figur 1: zeigt eine geschnittene Seitenansicht des Kegelfräsers mit Zerkleinerungswerkzeug an einem Rohrabschnitt und
- Figur 2: zeigt eine weitere geschnittene Seitenansicht des Kegelfräsers mit dem Schneidrad als Zentriereinrichtung in einer weiteren Ausführungsform.

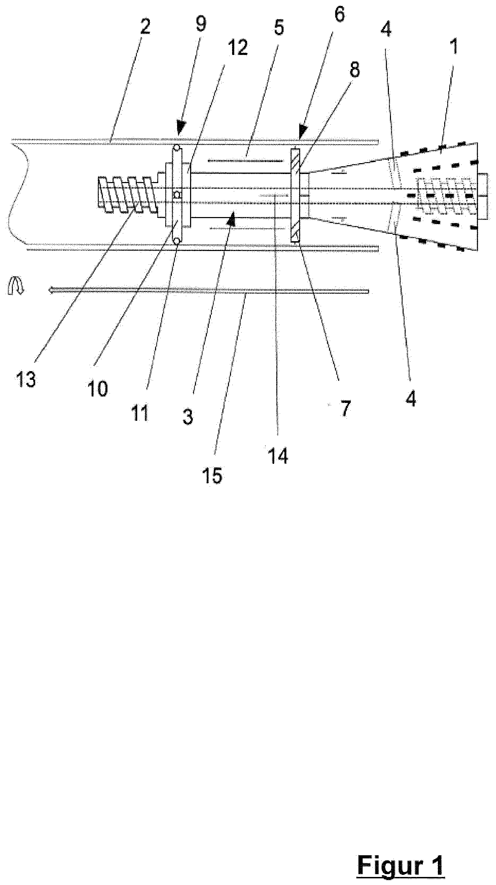

Die Figur 1 zeigt einen Kegelfräser 1 zum Entfernen eines im Erdreich verlegten Kunststoffrohres 2, wie beispielsweise ein Gas-, ein Wasser- oder ein Abwasserohr, welches aus PVC, PE PET, SLM-Material besteht. Der Kegelfräser 1 wirkt hierbei mit einem rotierenden Bohrgestänge 3 einer nicht näher dargestellten Bohrmaschine zusammen, die beispielsweise hier in einer Startgrube aufgestellt ist. Das Bohrgestänge 3, an dem der Kegelfräser 1 befestigt ist, wird zur Zerspanung des Rohres 2 eingefahren, in der Art, dass zur Startgrube hin das Bohrgestänge aufgekürzt wird.

Der Kegelfräser 1 umfasst hierbei Spülungskanäle 4, durch die die durch das Bohrgestänge 3 gepumpte Spülung mit dem anfallenden Span in den vom Rohr 2 und Bohrgestänge 3 gebildeten Ringraum 5 abgeführt werden. Es versteht sich von selbst, dass die durch das Bohrgestänge 3 gepumpte Spülflüssigkeit während des Zerspanungsvorganges durch die Spülkanäle 4 geleitet wird, wobei das zerspante Material über den Ringraum 5 zur Startgrube abgeführt wird.

Wie aus der Figur 1 ersichtlich ist, ist im Ringraum 5 ein Zerspanungswerkzeug 6 für die anfallenden abgeschälten Spanfäden vorgesehen. Das Zerkleinerungswerkzeug 6 ist dem Kegelfräser 1 im Ringraum 5 vorgeschaltet. Das Zerkleinerungswerkzeug 6 umfasst hierbei ein mit Schneiden 7 versehenes Schneidrad 8. Das Schneidrad 8 kann hierbei frei drehbar auf dem Bohrgestänge 3 angeordnet sein, wobei auch angedacht sein kann, dass das Schneidrad 8 mit Presssitz auf dem Mantel des Bohrgestänges 3 angeordnet sein kann. Ist das Schneidrad 8 frei drehbar auf dem Bohrgestänge 3 angeordnet, so wird es aufgrund seiner Ausführung durch die rückströmende Spülung selbst angetrieben, wobei durch die Hindurchführung der Spülung durch die Schneidbereiche 7 eine entsprechende Rotation im Ringraum bewirkt wird. Eine andere Art, um die Rotation zu bewirken, könnte darin bestehen, dass durch einen Presssitz auf dem Mantel des Bohrgestänges 3 das Schneidrad 8 durch die Spindel der Bohrmaschine erfolgt.

In Weiterbildung ist vor dem Schneidrad 8 ein Stabilisator 9 angeordnet, wobei der Stabilisator 9 einen Führungsring 10 umfasst, über dessen Umfang verteilt federngelagerte Wälzkörper 11 angeordnet sind, die an der Rohrinnenwandung anliegen. Hierbei ist der Führungsring 10 auf einem Stellring 12 angeordnet, der wiederum zur Fixierung des Stabilisators 9 auf dem Mantel des Bohrgestänges 3 dient. Wie aus der einzigen Figur zu erkennen ist, sind das Schneidrad 8 und der Stabilisator 9 auf einem Anschlussrohrstück 13 für den Kegelfräser 1 angeordnet.

Somit bilden Schneidrad 8 und der Stabilisator 9 mit dem Anschlussstück 13 eine Einheit, welches zwischen dem Bohrgestänge 3 und dem Kegelfräser 1 zwischengeschaltet werden kann, und die Einheit somit vor dem Kegelfräser 1 seine Wirkung erzielen kann.

Der Stabilisator 9 in seiner Ausführungsform bewirkt hierbei insbesondere die stabile Lage und Zentrierung des Kegelfräsers 1 bei der Rotation, so dass dadurch auch das Schneidrad 8 eine Spielmöglichkeit im Ringraum 5 erhält, und es zu keiner Einklemmung des Schneidrades 8 an der Ringraumwand der frei drehbar gelagerten Anordnung kommen kann.

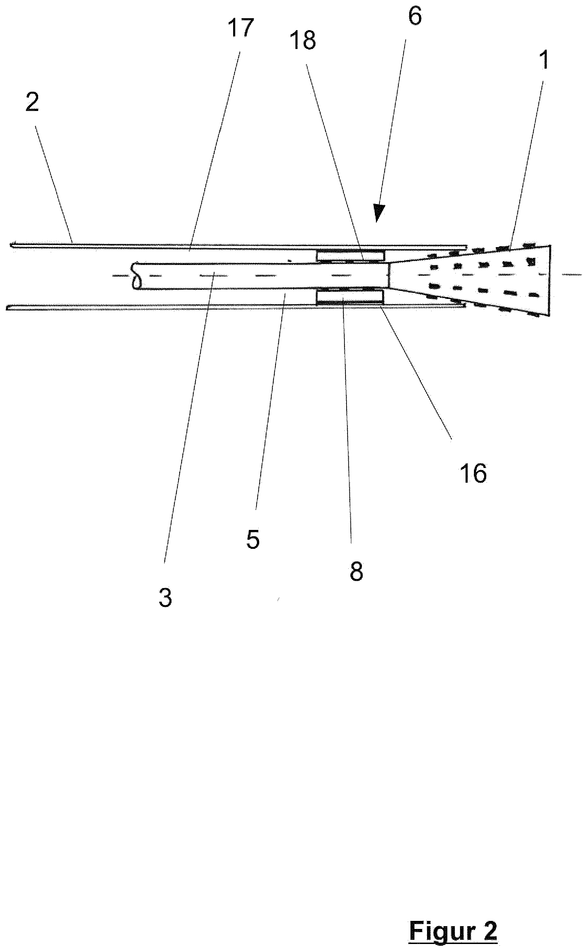

Die Figur 2 zeigt eine abgewandelte Ausführungsform der Erfindung, wobei das Schneidrad 8 bei dieser Ausführung selbst die Zentrierung des Kegelfräsers 1 ausübt. Bei dieser Art der Ausführung ist das Schneidrad 8 in seiner Funktion als Zentriereinrichtung für den Kegelfräser 1 drehbar auf dem Bohrgestänge 3 gelagert. Der Mantel 16 des Schneidrades 8 liegt hierbei im angesetzten Zustand an der Innenwandung 17 des Rohres 2 an. In Folge eines Reibschlusses zwischen Mantel 16 und der Innenwand 17 behält das Schneidrad 8 bei drehendem Bohrgestänge 3 eine nicht rotierende Position im Rohr 2 bei. Das Schneidrad 8 bildet somit ein verschiebbar gelagertes Zylinderelement, welches an der Rohrinnenwandung 17 gleitend und führend anliegt. Auf diese Weise bewirkt das im Rohr 2 gleitende Schneidrad 8 eine Ausrichtung des Kegelfräsers 1 in Rohrachse.

Zudem wirkt das stehende und gleitende Schneidrad 8 in dem Rohr 2 wie ein dem Kegelfräser 1 vorgeschaltetes Messer an dem der sich bildende Spanfaden in Folge des Rückbaus gekappt wird. Dies ist dadurch bedingt, das in Folge der rotierenden Bewegung des Kegelfräsers 1 die sich bildenden Spanfäden am nicht rotierenden Schneidrad 8 abgerissen werden und somit über die Spülung ausgetragen werden können. Eine Staubildung vor dem Kegelfräser 1 wird dadurch unterbunden.

Gemäß einer Weiterbildung ist hierbei das Schneidrad 8 am Bohrgestänge 3 mittels Wälzkörperlagerung 18 gelagert. Denkbar sind hierbei auch andere Lagerungen vorzusehen, wobei auch ein abgedichtetes Gleitlager durchaus eingesetzt werden kann.

Die in der Zeichnung insbesondere in der Figur 1 vorhandenen Pfeile zeigen einmal den Weg der Spülung, welcher mit dem Bezugszeichen 14 dokumentiert wird, wobei mit dem großen Pfeil 15 die Abtragsrichtung des Rohres 2 im Erdreich dargestellt wird.

### Bezugszeichen liste

- 1: Kegelfräser
- 2: Kunststoffrohr
- 3: Bohrgestänge
- 4: Spülkanäle
- 5: Ringraum
- 6: Zerspanungswerkzeug
- 7: Schneiden
- 8: Schneidrad
- 9: Stabilisator
- 10: Führungsring
- 11: Wälzkörper
- 12: Stellring
- 13: Anschlussrohrstück
- 14: Spülung
- 15: Abtragsrichtung Kunststoffrohr
- 16: Mantel Schneidrad
- 17: Innenwandung Rohr
- 18: Wälzkörperlagerung

## Patentansprüche

1. Kegelfräser (1) zum Entfernen eines im Erdreich verlegten Kunststoffrohres (2) wie beispielsweise ein Gas-, ein Wasser- oder ein Abwasserrohr, welches aus PVC, PE, PET, SLM Material besteht, der mit einem rotierenden Bohrgestänge (3) einer Bohrmaschine zusammenwirkt, welches zur Zerspanung des Rohres (3) eingefahren wird, und der Kegelfräser (1) Spülungskanäle (4) umfasst, durch die die durch das Bohrgestänge (3) gepumpte Spülung mit dem anfallenden Span in dem von Rohr (2) und Bohrgestänge (3) gebildeten Ringraum (5) abgeführt werden,
**dadurch gekennzeichnet,**
**dass** im Ringraum (5) ein Zerkleinerungswerkzeug (6) für den anfallenden abgeschälten Span vorgesehen ist.

2. Kegelfräser nach Anspruch 1,
**dadurch gekennzeichnet,**
**dass** das Zerkleinerungswerkzeug (6) dem Kegelfräser (1) im Ringraum (5) vorgeschaltet angeordnet ist.

3. Kegelfräser nach Anspruch 1 und 2,
**dadurch gekennzeichnet,**
**dass** das Zerkleinerungswerkzeug (6) ein mit Schneiden (7) versehenes Schneidrad (8) umfasst.

4. Kegelfräser nach den Ansprüchen 1 bis 3,
**dadurch gekennzeichnet,**
**dass** das Schneidrad (8) freidrehbar auf dem Borgestänge (3) angeordnet ist.

5. Kegelfräser nach den Ansprüchen 1 bis 4,
**dadurch gekennzeichnet,**
**dass** das Schneidrad (8) mit Presssitz auf dem Mantel des Bohrgestänges (3) angeordnet ist.

6. Kegelfräser nach den Ansprüchen 1 bis 5,
**dadurch gekennzeichnet,**
**dass** vor dem Schneidrad (8) ein Stabilisator (9) angeordnet ist.

7. Kegelfräser nach den Ansprüchen 1 bis 6,
**dadurch gekennzeichnet,**
**dass** der Stabilisator (9) einen Führungsring (10) umfasst, über dessen Umfang verteilt Feder gelagerte Wälzkörper (11) angeordnet sind, die an der Rohrinnenwandung anliegen.

8. Kegelfräser nach den Ansprüchen 1 bis 7,
**dadurch gekennzeichnet,**
**dass** der Führungsring (10) auf einem Stellring (12) angeordnet ist zur Fixierung des Stabilisators (9) auf dem Mantel des Bohrgestänges (3).

9. Kegelfräser nach den Ansprüchen 1 bis 8,
**dadurch gekennzeichnet,**
**dass** das Schneidrad (8) und der Stabilisator (9) auf einem Anschlussrohrstück (13) für den Kegelfräser (1) angeordnet sind.

10. Kegelfräser nach den Ansprüchen 1 bis 9,
**dadurch gekennzeichnet,**
**dass** das Anschlussrohrstück (13) mit Kegelfräser (1) an das Bohrgestänge (3) ansetzbar ist.

11. Kegelfräser nach den Ansprüchen 1 bis 3,
**dadurch gekennzeichnet,**
**dass** das Schneidrad (8) als Zentriereinrichtung für den Kegelfräser (1) ausgebildet ist.

12. Kegelfräser nach Anspruch 11,
**dadurch gekennzeichnet,**
**dass** das Schneidrad (8) in seiner Funktion als Zentriereinrichtung drehbar auf dem Bohrgestänge (3) angeordnet ist, wobei der Mantel (16) des Schneidrades (8) an der Innenwandung (17) des Rohres (2) anliegt.

13. Kegelfräser nach den Ansprüchen 11 und 12,
**dadurch gekennzeichnet,**
**dass** das Schneidrad (8) am Bohrgestänge (3) mittels Wälzkörper (18) gelagert ist.

## Claims

1. A cone cutter (1) for removing a plastic pipe (2) laid in the ground, such as for example a gas pipe, a water pipe or a sewage pipe which consists of PVC, PE, PET, SLM material, and which cooperates with a rotating drilling rod (3) of a drilling machine which is driven in for machining the pipe (3), and the cone cutter (1) comprises flushing channels (4), the flushing material pumped by the drilling rod (3) together with the accumulating machined material in the annular space (5) formed by the pipe (2) and the drilling rod (3) being discharged through said flushing channels,
**characterised in that**
a comminuting tool (6) is provided in the annular space (5) for the accumulating peeled-off machined material.

2. The cone cutter according to Claim 1, **characterised in that** the comminuting tool (6) is arranged so as to be connected upstream of the cone cutter (1) in the annular space (5).

3. The cone cutter according to Claim 1 and 2, **characterised in that** the comminuting tool (6) comprises a cutting wheel (8) which is provided with cutting edges (7).

4. The cone cutter according to Claims 1 to 3, **characterised in that** the cutting wheel (8) is arranged so as to be freely rotatable on the drilling rod (3).

5. The cone cutter according to Claims 1 to 4, **characterised in that** the cutting wheel (8) is arranged with a press-fit on the casing of the drilling rod (3).

6. The cone cutter according to Claims 1 to 5, **characterised in that** a stabilizer (9) is arranged upstream of the cutting wheel (8).

7. The cone cutter according to Claims 1 to 6, **characterised in that** the stabilizer (9) comprises a guide ring (10), spring-mounted rolling bodies (11) being arranged so as to be distributed over the periphery thereof and bearing against the pipe inner wall.

8. The cone cutter according to Claims 1 to 7, **characterised in that** the guide ring (10) is arranged on an adjusting ring (12) for fixing the stabilizer (9) to the casing of the drilling rod (3).

9. The cone cutter according to Claims 1 to 8, **characterised in that** the cutting wheel (8) and the stabilizer (9) are arranged on a connecting pipe piece (13) for the cone cutter (1).

10. The cone cutter according to Claims 1 to 9, **characterised in that** the connecting pipe piece (13) is able to be positioned with the cone cutter (1) onto the drilling rod (3).

11. The cone cutter according to Claims 1 to 3, **characterised in that** the cutting wheel (8) is configured as a centring device for the cone cutter (1) .

12. The cone cutter according to Claim 11, **characterised in that** the cutting wheel (8) in its function as a centring device is rotatably arranged on the drilling rod (3), wherein the casing (16) of the cutting wheel (8) bears against the inner wall (17) of the pipe (2).

13. The cone cutter according to Claims 11 and 12, **characterised in that** the cutting wheel (8) is mounted on the drilling rod (3) by means of rolling bodies (18) .

## Revendications

1. Fraise conique (1) destinée à l'enlèvement d'un tuyau de matière plastique (2) posé dans le sol, comme par exemple un tuyau de gaz, d'eau ou d'eaux usées, lequel est composé de polychlorure de vinyle (PCV), de polyéthylène (PE), de polyéthylène téréphtalate (PET), de matériau obtenu par fusion sélective au laser (SLM), qui coopère avec une tige en rotation (3) d'une foreuse, laquelle est mise en œuvre pour découper le tuyau (3) et la fraise conique (1) comprend des conduits d'évacuation (4) à travers lesquels les boues de forage pompées par la tige de forage (3) avec les copeaux se formant sont évacuées dans l'espace annulaire (5) formé par le tuyau (2) et la tige de forage (3),
**caractérisée en ce que**
dans l'espace annuaire (5), un outil de broyage (6) est prévu pour les copeaux décortiqués se formant.

2. Fraise conique selon la revendication 1, **caractérisée en ce que**
l'outil de broyage (6) est disposé monté en amont de la fraise conique (1) dans l'espace annulaire (5).

3. Fraise conique selon les revendications 1 et 2, **caractérisée en ce que**
l'outil de broyage (6) comprend une roue de coupe (8) dotée de tranchants (7).

4. Fraise conique selon les revendications 1 à 3, **caractérisée en ce que**
la roue de coupe (8) est disposée pouvant tourner librement sur la tige de forage (3).

5. Fraise conique selon les revendications 1 à 4, **caractérisée en ce que**
la roue de coupe (8) est disposée avec ajustage serré sur la gaine de la tige de forage (3).

6. Fraise conique selon les revendications 1 à 5, **caractérisée en ce qu'**
un stabilisateur (9) es disposé avant la roue de coupe (8) .

7. Fraise conique selon les revendications 1 à 6, **caractérisée en ce que**
le stabilisateur (9) comprend une bague de guidage (10) par le biais de laquelle sont disposés des roulements montés sur ressort répartis sur la périphérie (11).

8. Fraise conique selon les revendications 1 à 7, **caractérisée en ce que**
la bague de guidage (10) est disposée sur une bague de réglage (12) pour fixer le stabilisateur (9) sur la gaine de la tige de forage (3).

9. Fraise conique selon les revendications 1 à 8, **caractérisée en ce que**
la roue de coupe (8) et le stabilisateur (9) sont disposés sur un embout de raccord (13) pour la fraise conique (1).

10. Fraise conique selon les revendications 1 à 9, **caractérisée en ce que**
l'embout de raccord (13) peut être mis en place avec la fraise conique (1) sur la tige de forage (3).

11. Fraise conique selon les revendications 1 à 3, **caractérisée en ce que**
la roue de coupe (8) est constituée comme système de centrage pour la fraise conique (1).

12. Fraise conique selon la revendication 11, **caractérisée en ce que**
la roue de coupe (8) est disposée pouvant tourner sur la tige de forage (3) dans son fonctionnement en tant que système de centrage, sachant que la gaine (16) de la roue de coupe (8) est adjacente à la paroi intérieure (17) du tuyau (2).

13. Fraise conique selon les revendications 11 et 12, **caractérisée en ce que**
la roue de coupe (8) est logée sur la tige de forage (3) au moyen d'un roulement (18).
